# EUROPEAN PATENT APPLICATION

(11) **EP 4 329 042 A1**
(43) Date of publication of application: **28.02.2024**
(21) Application number: 22896088.6
(22) Date of filing: 17.11.2022
(51) Int. Cl.: H01M 10/0585, H01M 50/178, H01M 50/124, H01M 50/105, H01M 10/42, H01M 10/052

(54) **POUCH-TYPE LITHIUM SECONDARY BATTERY**

(30) Priority: 22.11.2021 KR 20210160923; 16.11.2022 KR 20220153613
(71) Applicant: LG Energy Solution, Ltd., Seoul 07335 (KR)
(72) Inventor: PARK, Gi Su, Daejeon 34122 (KR); LEE, Hyunsoo, Daejeon 34122 (KR); LEE, Jaegil, Daejeon 34122 (KR); SHIN, Dongseok, Daejeon 34122 (KR)
(74) Representative: Goddar, Heinz J.
(86) International application number: PCT/KR2022/018177
(87) International publication number: WO 2023/090887

(57) **Abstract**

The present invention relates to a lithium secondary battery and, more specifically, to a pouch-type lithium secondary battery having a positive electrode lead tab and a negative electrode lead tab formed on one end of a positive electrode and a negative electrode, respectively. In the pouch-type lithium secondary battery, the length of a separator located between the positive electrode and the negative electrode is controlled such that the separator protrudes longer than the end of the positive electrode and the length of the protruding part of the separator extends at the most to a sealing part located along the edge of the pouch, thereby preventing shorting between the positive electrode and the negative electrode to enhance safety and life characteristics.

## Description

This application claims the benefits of priorities based on Korean Patent Application No.2021-0160923 filed on November 22, 2021 and Korean Patent Application No. 2022-0153613 filed on November 16, 2022.

### Field of Disclosure

One aspect of the present disclosure relates to a pouch-type lithium secondary battery.

### Background

In general, types of secondary batteries comprise nickel cadmium batteries, nickel hydrogen batteries, lithium-ion batteries, and lithium-ion polymer batteries. These secondary batteries are applied and used not only for small products such as digital cameras, P-DVDs, MP3Ps, mobile phones, PDAs, portable game devices, power tools, and E-bikes, but also for large products requiring high output, such as electric vehicles or hybrid vehicles, power storage devices that store surplus generated power or renewable energy, and power storage devices for backup.

The lithium secondary battery is generally composed of a positive electrode, a separator and a negative electrode, and their materials are selected in consideration of the lifetime of the battery, charging/discharging capacity, temperature characteristics and stability. In the lithium secondary battery, as the process of intercalation and deintercalation of lithium ions from the Li-metal oxide of the positive electrode to the graphite electrode of the negative electrode is repeated, the charging/discharging is proceeded. In general, the lithium secondary battery has a three-layer structure of positive electrode/separator/negative electrode, or has been designed as a five-layer structure of positive electrode/separator/negative electrode/separator/positive electrode or negative electrode/separator/positive electrode/separator/negative electrode. In addition, in the above structures, each layer of the negative electrode or the positive electrode is coated with the same amount of electrode active material and laminated so that each of the negative electrode and the positive electrode has the same thickness. The above unit cells are gathered to form one electrode assembly or secondary battery.

In this secondary battery, the one-way-type electrode terminals are manufactured by forming the electrode tabs of the positive electrode and the negative electrode of the electrode assembly in the same direction, and then connecting electrode leads to the electrode tabs to form electrode terminals. In the case of a one-way cell, there is a disadvantage in that the lifespan is not good due to heat generation on the electrode lead side and non-uniformity in the use of the active material of the cell during charging and discharging.

The two-way-type electrode terminals are manufactured by forming electrode tabs of the positive electrode and the negative electrode of the electrode assembly on opposite surfaces of the electrode assembly, and then connecting electrode leads to the electrode tabs to form electrode terminals. In the case of a two-way cell, when a battery pack is configured, it occupies more space than a one-way cell, and thus has a disadvantage that the energy density is lowered.

In particular, in the case of the one-way-type electrode terminals, since the electrode tabs of the positive electrode and the negative electrode are formed in the same direction, there may be a problem that as the charging/discharging of the battery is proceeded, the lithium dendrite precipitated from the negative electrode is grounded with the electrode tab of the positive electrode, thereby resulting in a short circuit.

Accordingly, in the case of the lithium secondary battery in which one-way-type electrode terminals are formed, there is a continuous demand for research and development on the structure of the lithium secondary battery that can prevent short circuit between the positive electrode and the negative electrode even if lithium dendrite grows from the negative electrode.

### Related Arts

Korean Patent Publication No. 2006-0118955

### Summary

The inventors of one aspect of the present disclosure have conducted various studies to solve the above problems, and as a result, have confirmed that in a pouch-type lithium secondary battery in which the lead tab of the positive electrode and the lead tab of the negative electrode are formed at one end of the positive electrode and the negative electrode, respectively, it is possible to prevent a short circuit between the positive electrode and the negative electrode, and thus improve the safety and lifetime characteristics of the battery by controlling the length of the separator located between the positive electrode and the negative electrode, but making the separator to be protruded relative to the end of the positive electrode and thus controlling the maximum length of the protruding portion of the separator to the sealing portion located along the edge of the pouch.

Therefore, it is an object of one aspect of the present disclosure to provide a pouch-type lithium secondary battery having a structure capable of preventing a short circuit between a positive electrode and a negative electrode.

In order to achieve the objects, one aspect of the present disclosure provides a secondary battery comprising:
an electrode assembly comprising a positive electrode, a separator, and a negative electrode;
a pouch accommodating the electrode assembly; and
electrode lead tabs electrically connected to the electrode assembly,
wherein the electrode lead tabs include a lead tab of the positive electrode and a lead tab of the negative electrode,
the pouch has a sealing portion at an edge and a junction portion which seals a portion where the electrode lead tab protrudes to the outside of the pouch through the sealing portion, and
the separator protrudes relative to one end of the positive electrode, and a length of the protruding portion is less than or equal to a length from the one end of the positive electrode to the sealing portion.

The positive electrode has the positive electrode lead tab electrically connected to one end thereof, and the negative electrode has the negative electrode lead tab electrically connected to one end thereof, and the positive electrode lead tab and the negative electrode lead tab may be electrically connected to the positive electrode and the negative electrode in the same direction or opposite directions.

The pouch may be an aluminum pouch.

The junction portion may comprise a thermoplastic resin.

A part of the protruding portion of the separator may have an insulation layer.

The insulation layer may be formed on one side or both sides of the separator.

The insulation layer may comprise one or more selected from the group consisting of polyethylene (PE), polypropylene (PP), and polyethylene terephthalate (PET).

One end of the separator may partially protrude to overlap with the positive electrode lead tab, or may have a shape surrounding the positive electrode lead tab.

The negative electrode may be a lithium negative electrode.

The lithium secondary battery may be a lithium-sulfur secondary battery.

According to one aspect of the present disclosure, in a pouch-type lithium secondary battery in which the positive electrode lead tab and the negative electrode lead tab are formed at one end of the positive electrode and the negative electrode, respectively, it is possible to prevent a short circuit between the positive electrode and the negative electrode, and improve the stability and lifetime characteristics of the battery by making the separator protrude compared to the end of the positive electrode and thus structurally minimizing the contact between the lithium dendrite and the positive electrode even if the lithium dendrite grows on the negative electrode during the operation of the battery.

### Brief Description of Drawings

FIG. 1 is a schematic diagram showing a cross section of an electrode assembly comprised in a pouch-type lithium secondary battery according to a preferred embodiment of one aspect of the present disclosure.
FIG. 2 is a partial schematic diagram showing the protruding portion of the positive electrode lead tab and the negative electrode lead tab in a pouch-type lithium secondary battery according to a preferred embodiment of one aspect of the present disclosure.
FIG. 3 shows an exploded view of an electrode assembly comprised in a pouch-type lithium secondary battery according to a preferred embodiment of one aspect of the present disclosure.
FIG. 4 shows an exploded view of an electrode assembly comprised in a pouch-type lithium secondary battery according to another preferred embodiment of one aspect of the present disclosure.

### Detailed Description

Hereinafter, the present disclosure will be described in more detail to aid understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

### Pouch-type lithium secondary battery

One aspect of the present disclosure relates to a pouch-type lithium secondary battery which has a structure that prevents a short circuit between a positive electrode and a negative electrode by lithium dendrite growing from the negative electrode during charging/discharging by controlling the length of the separator in the pouch-type lithium secondary battery comprising an electrode assembly having a form in which a positive electrode, a separator, and a negative electrode are sequentially laminated.

Hereinafter, one aspect of the present disclosure will be described in more detail with reference to the drawings.

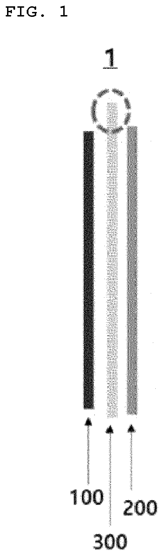

FIG. 1 is a schematic diagram showing a cross section of an electrode assembly comprised in a pouch-type lithium secondary battery according to a preferred embodiment of one aspect of the present disclosure.

Referring to FIG. 1, the electrode assembly 10 comprised in the pouch-type lithium secondary battery 1 of one aspect of the present disclosure is characterized in that the positive electrode 100, the separator 300, and the negative electrode 200 are sequentially laminated, and the length of the separator 300 is longer than that of the positive electrode 100. In addition, the length of the separator 300 may also be longer than the length of the negative electrode 200.

Since the separator 300 is longer than the positive electrode 100, it has a protruding shape based on one end of the positive electrode 100. In addition, since the separator 300 may be longer than the negative electrode 200, it may have a protruding shape based on one end of the negative electrode 200.

In this case, the positive electrode has a positive electrode lead tab electrically connected to only one end, and the negative electrode also has a negative electrode lead tab electrically connected to only one end. In the electrode assembly, directions in which the positive electrode lead tab and the negative electrode lead tab are connected to the positive electrode and the negative electrode may be in the same direction or opposite directions.

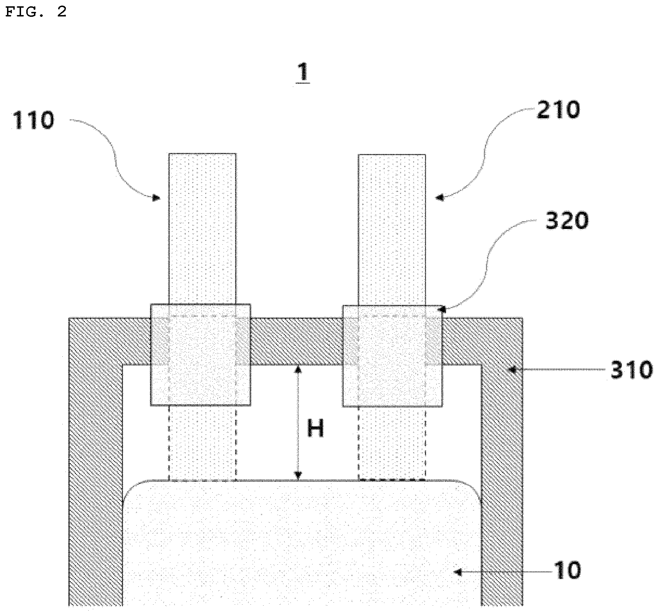

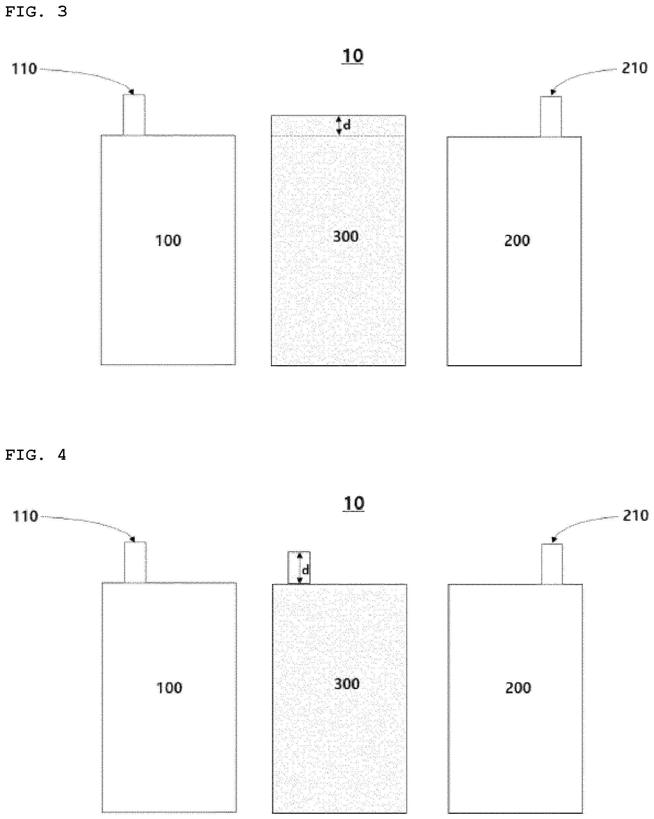

FIG. 2 is a partial schematic diagram showing the protruding portion of the positive electrode lead tab and the negative electrode lead tab in a pouch-type lithium secondary battery according to a preferred embodiment of one aspect of the present disclosure, which may be a cross-sectional view of the pouch-type lithium secondary battery. FIG. 3 shows an exploded view of an electrode assembly comprised in a pouch-type lithium secondary battery according to a preferred embodiment of one aspect of the present disclosure.

Referring to FIG. 2, in the pouch-type lithium secondary battery 1, the electrode assembly 10 formed by laminating the positive electrode 100, the separator 300, and the negative electrode 200 is accommodated in the pouch.

Referring to FIG. 3, the separator 300 comprised in the electrode assembly 10 comprised in the pouch-type lithium secondary battery 1 has a longer length than the positive electrode 100, and specifically, protrudes as much as d, which is the length of the protruding portion of the separator 300, based on one end of the positive electrode 100.

In the electrode assembly 10, the separator 300 may have a protruding shape compared to one end of the positive electrode 100 (not shown). The length of the protruding portion of the separator 300 may be less than or equal to the length from one end of the positive electrode to the sealing portion 310. In other words, the length (d) of the protruding portion of the separator 300 is less than or equal to the length (H) from one end of the positive electrode 100 to the sealing portion 310, specifically, the inner surface of the sealing portion 310 (d ≤ H). More specifically, d ≤ H, d ≤ 0.9*H, d ≤ 0.7*H, d ≤ 0.5*H or d ≤ 0.5*H. The lower limit of the d is not particularly limited as long as it exceeds 0, but may be, for example, 0.1*H or more (d ≥ 0.1*H). If the d exceeds H (d > H), a part of the separator, for example, since the end is comprised in the inside of the sealing portion, and thus the sealing is not properly performed, when injecting the electrolyte solution into the pouch, the electrolyte solution may flow into the sealing portion or the electrolyte solution may flow out through the separator.

In addition, the electrode assembly 10 is electrically connected to the electrode lead tab, and the electrode lead tab includes a positive electrode lead tab 110 and a negative electrode lead tab 210.

The positive electrode 100 has a positive electrode lead tab 110 electrically connected to one end, and the negative electrode 200 has a negative electrode lead tab 210 electrically connected to one end. The positive electrode lead tab 110 and the negative electrode lead tab 210 are electrically connected to the positive electrode 100 and the negative electrode 200 in the same direction.

The electrode assembly 10 is accommodated in the interior of the pouch, and the pouch has a sealing portion 310 formed along the circumference of the edge of the pouch and a junction portion 320 that seals a portion, where the positive electrode lead tab 110 and the negative electrode lead tab 210 protrude to the outside of the pouch, through the sealing portion 310.

The junction portion 320 may seal the pouch and at the same time serve as a buffer for the sealing portion 310. If an excessively high pressure and/or temperature is applied to the junction portion 320, the junction portion 320 is damaged, and current flows between the aluminum pouch and the electrode lead tab, and thus
the junction portion 320 may serve as a buffer for the sealing portion 310. If an excessively high pressure and/or temperature is applied to the junction portion 320, current flows between the aluminum pouch and the positive electrode lead tab and/or the negative electrode lead tab, and as a result, the safety of the battery may be decreased.

Considering the functionality of the junction portion 320 as described above, the junction portion 320 may be formed of a thermoplastic resin.

The thermoplastic resin is not particularly limited as long as it can seal the pouch and act as a buffer for the sealing portion 310. For example, the thermoplastic resin may be one or more selected from the group consisting of polyvinyl chloride (PVC), polystyrene (PS), polycarbonate (PC), polymethyl methacrylate (PMMA), acrylonitrile butadiene styrene (ABS) polyurethane (PU), polyamide (PA), polyacetal (POM), polyphenylene sulfide (PPS), polybutylene terephthalate (PBT), polyimide (PI), liquid crystal polymer (LCP), polyether ether ketone (PEEK), polyether ketone (PEK), ethylene propylene diene methylene rubber (EPDM), and acrylic rubber (ACM).

In one aspect of the present disclosure, the protruding portion of the separator may be one on which an insulation layer is formed. The insulation layer may be formed partially at an end of the protruding portion of the separator. For example, the separator may have an insulation layer formed from one end of the edge of the protruding portion to a length of d/5, 4/d, or 3/d.

The insulation layer may be formed on one side or both sides of the separator, and when an insulation layer is formed on one side of the separator, if it is formed on the side facing the negative electrode, it can be effective in preventing short circuit caused by the growth of lithium dendrite from the negative electrode.

The insulation layer comprises an insulating material, and the insulating material is not particularly limited as long as it is a material having insulating properties. The insulating material may be, for example, any one of polyethylene (PE), polypropylene (PP), and polyethylene terephthalate (PET), or a derivative of any one of them or a copolymer containing any one or more of them.

In addition, the insulating material may further comprise polyvinylidene fluoride (PVDF) having high strength, processability, and excellent chemical resistance.

The insulation layer may have a structure in which an insulating material as described above is applied, and may also have a structure in which an insulation tape is attached to a corresponding portion. The insulation tape may have a structure comprising any one of PE, PP, and PET, or a derivative thereof, or a copolymer containing any one or more of them.

In addition, the separator may be formed so that only the portion overlapping the positive electrode lead tab is protruded.

FIG. 4 shows an exploded view of an electrode assembly comprised in a pouch-type lithium secondary battery according to another preferred embodiment of one aspect of the present disclosure, wherein one end of the separator 300 may have a protruding shape so as to overlap the positive electrode lead tab 110. More specifically, one end of the separator 300 may protrude and wrap around the positive electrode lead tab 110.

Since the negative electrode lead tab 210 itself is a negative electrode active material, the separator 300 may protrude to overlap with the negative electrode lead tab 210 portion, or wrap around the negative electrode lead tab 210, and a lithium dendrite may also grow by reaction with the electrolyte solution. On the other hand, since there is no positive electrode active material in the positive electrode lead tab 110, if one end of the separator 300 protrudes to overlap with the positive electrode lead tab 110 or wraps around the positive electrode lead tab 110, side reactions may not proceed and the contact with lithium dendrite can be also prevented.

Since the lithium secondary battery as described above is intended to prevent lithium dendrite grown on the negative electrode from contacting the positive electrode, it can be effective in the case of using a lithium negative electrode as the negative electrode.

In addition, the lithium secondary battery may be a lithium-sulfur secondary battery containing sulfur as a positive electrode active material.

The positive electrode, the separator, and the electrolyte included in the lithium-sulfur secondary battery can be prepared according to conventional ingredients and manufacturing methods, respectively. In addition, there is no particular limitation on the appearance of the lithium-sulfur secondary battery, but it may be a cylindrical shape using a can, a prismatic shape, a pouch type, or a coin type.

In the above, although the present disclosure has been described by way of limited embodiments and drawings, the present disclosure is not limited thereto, and it is apparent to those skilled in the art that various modifications and variations can be made within the equivalent scope of the technical spirit of the present disclosure and the claims to be described below.

### Description of Reference Numerals

1: Pouch-type lithium secondary battery
10: Electrode assembly
100: Positive electrode
110: Positive electrode lead tab
200: Negative electrode
210: Negative electrode lead tab
300: Separator
310: Sealing portion
320: Junction portion
d: Length from one end of positive electrode to protruding portion of separator
H: Length from one end of positive electrode to sealing portion

## Claims

1. A pouch-type lithium secondary battery comprising:
an electrode assembly comprising a positive electrode, a separator, and a negative electrode;
a pouch accommodating the electrode assembly; and
an electrode lead tab electrically connected to the electrode assembly,
wherein the electrode lead tab comprises a positive electrode lead tab and a negative electrode lead tab,
the pouch has a sealing portion at an edge and a junction portion which seals a portion where the electrode lead tab protrudes to the outside of the pouch through the sealing portion, and
the separator protrudes relative to one end of the positive electrode, and a length of the protruding portion is less than or equal to a length from the one end of the positive electrode to the sealing portion.

2. The pouch-type lithium secondary battery according to claim 1, wherein the positive electrode has the positive electrode lead tab electrically connected to one end thereof, the negative electrode has the negative electrode lead tab electrically connected to one end thereof, and the positive electrode lead tab and the negative electrode lead tab are electrically connected to the positive electrode and the negative electrode in the same direction or opposite directions.

3. The pouch-type lithium secondary battery according to claim 1, wherein the pouch is an aluminum pouch.

4. The pouch-type lithium secondary battery according to claim 1, wherein the junction portion comprises a thermoplastic resin.

5. The pouch-type lithium secondary battery according to claim 1, wherein a part of the protruding portion of the separator has an insulation layer.

6. The pouch-type lithium secondary battery according to claim 5, wherein the insulation layer is formed on one or both sides of the separator.

7. The pouch-type lithium secondary battery according to claim 5, wherein the insulation layer comprises one or more selected from the group consisting of polyethylene (PE), polypropylene (PP), and polyethylene terephthalate (PET).

8. The pouch-type lithium secondary battery according to claim 1, wherein one end of the separator partially protrudes to overlap with the positive electrode lead tab or wraps around the positive electrode lead tab.

9. The pouch-type lithium secondary battery according to claim 1, wherein the negative electrode is a lithium negative electrode.

10. The pouch-type lithium secondary battery according to claim 1, wherein the lithium secondary battery is a lithium-sulfur secondary battery.
